# EUROPEAN PATENT APPLICATION

(11) **EP 1 486 378 A2**
(43) Date of publication of application: **15.12.2004**
(21) Application number: 04425409.2
(22) Date of filing: 03.06.2004
(51) Int. Cl.: B60Q 7/00

(54) **Improved warning red triangle**

(30) Priority: 09.06.2003 IT rm20030101 U
(71) Applicant: Colaprico S.r.l., 64024 Notaresco (TE) (IT)
(72) Inventor: Gaboli, Giuseppe Colaprico S.r.l., 64024 Notaresco (TE) (IT)
(74) Representative: Iannone, Carlo Luigi

(57) **Abstract**

The invention relates to a warning red triangle (1) for signalling a stop along a road comprising a support base (2, 3) and a triangle shaped structure, made up of three foldable sides, characterised in that said triangle shaped structure provides three outer sides (4), comprised of, or coated with, retro reflector material, and three inner sides (5), each one of said inner sides being substantially parallel to a relevant outer side (4), said inner sides (5) being comprised of, or coated with, fluorescent material, said inner sides (5) being coupled to the relevant outer side (4) by means (7) allowing its positioning in a triangle (1) folding condition, in a position substantially parallel with respect to the relevant outer side (4).

## Description

The present invention relates to an improved warning red triangle for signalling a stop along a road.

More specifically, the invention relates to a triangle of the above kind, realised in such a way to allow a reduction of dimensions when it is not used.

As it is well known to all the car drivers, and not only to them, each vehicle circulating along a road must be provided, according to the rules in force in all the Nations, with triangle for signalling a stop along a road.

Mainly, triangles provided on the circulating vehicles are delivered to the owner of the vehicle folded in such a way to b housed occupying as less room as possible, and thus easily opened and assembled in such a condition to allow its positioning on the road.

At present, always fulfilling the existing rules in the road circulation field, triangles must have the three outer sides of the same triangles comprised of retro reflector material, and corresponding inner parts comprised of fluorescent material, in such a way to allow an easy individuation of the warning triangle with each illumination condition, both diurnal and nocturnal.

In the warning triangle available on the market, the fluorescent material part is provided inside the sides of the triangle, and is integrally coupled to the sides of the same triangle.

As it is well evident, the above solution creates an dimensions obstructing the folding of the not used triangle, thus occupying a larger space within the boot of the vehicle, or within another suitable space.

To the above requirements responds the solution suggested by the present invention, providing ain improved triangle realised in such a way to be foldable occupying the minor possible space, and opened again in a very easy and fast way.

Another object of the present invention is that of providing a triangle with support legs realised in such a way to further reduce the dimensions.

It is therefore specific object of the present invention a warning red triangle for signalling a stop along a road comprising a support base and a triangle shaped structure, made up of three foldable sides, characterised in that said triangle shaped structure provides three outer sides, comprised of, or coated with, retro reflector material, and three inner sides, each one of said inner sides being substantially parallel to a relevant outer side, said inner sides being comprised of, or coated with, fluorescent material, said inner sides being coupled to the relevant outer side by means allowing its positioning in a triangle folding condition, in a position substantially parallel with respect to the relevant outer side.

Preferably, according to the invention, said inner sides are coupled to said inner sides by pins allowing its rotation in a position substantially parallel with respect to the relevant outer side, preferably behind the relevant outer side.

Still according to the invention, said inner sides are coupled to said outer sides by sliding means allowing their sliding in a position substantially parallel with respect to the relevant outer side, preferably behind the relevant outer side.

Furthermore, according to the invention, said support base provides two support elements, pivoted at the bottom to the triangle shaped structure, in such a way to be able to take two positions, respectively a use and a rest position, and provided at their ends with two downward foldable legs, so as to be able to take two positions, respectively a use and a rest position.

The present invention will be now described, for illustrative but not limitative purposes, according to its preferred embodiments, with particular reference to the figures of the enclosed drawings, wherein:
Figure 1 is a view of a triangle according to the invention within a case;
Figure 2 is a front view of the triangle of figure 1 open; and
Figure 3 shows a particular of an element of a triangle of figures 1 and 2.

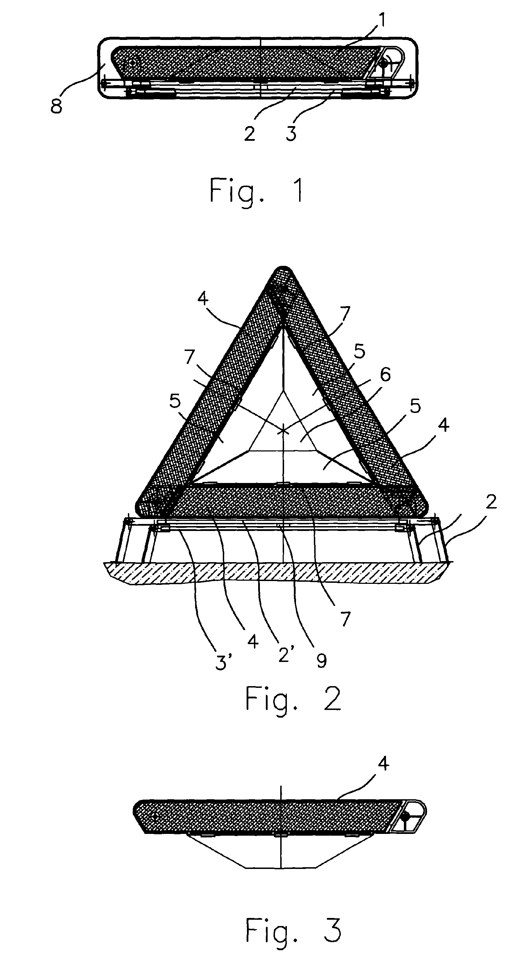

Observing all the figures of the enclosed drawings, it is shown a triangle according to the invention, generically indicated by reference number 1, providing (see in particular figure 2) two legs 2, 3. that will be described in greater detail in the flowing and a triangle structure comprised of three outer sides 4 and of three inner sides 5.

Particularly, outer sides 4 of the triangle 1 re provided with a retro reflector coating, while inner sides 5 of the triangle 1 are provided with fluorescent coating. It is well evident that the coating of the sides 4 and 5 and application mode are not limiting of the present invention.

An empty zone 6 is provided inside the figure obtained by the outer sides 5.

Outer sides 5 are coupled to the relevant inner sides 4 by a rotation pin 7, allowing its rearward (in the figure) rotation, in such a way to be placed behind the outer sides 4 when the triangle 1 must be folded and put within the case 8, in such a way to occupy the minor space possible.

It must be considered that the disappearance system of the inner sides 5 behind the outer sides shown in the figures cannot be considered as limitative of the present invention, being it possible to use further solutions, such as a sliding of the inner sides 5 behind the outer sides 4, providing suitable slides, or similar means.

Coming now to specifically describe the legs 2, 3 of the triangle according to the invention, as it can be noted from figures 1 and , they are comprised of two rods 2', 3', centrally pivoted on pin 9 provided at the bottom of the lower inner side 4, having at their ends little foldable legs 2", 3" to put them in a position parallel with respect to the rods 2', 3'. Leg 3 can be rotated with respect to triangle 1, in such a way to realise a valid support structure.

From figure 1 it is clearly noted that the triangle 1 according to the invention can be folded in an extremely reduced shape within the case 8, thus occupying a very limited space.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Warning red triangle for signalling a stop along a road comprising a support base and a triangle shaped structure, made up of three foldable sides, **characterised in that** said triangle shaped structure provides three outer sides, comprised of, or coated with, retro reflector material, and three inner sides, each one of said inner sides being substantially parallel to a relevant outer side, said inner sides being comprised of, or coated with, fluorescent material, said inner sides being coupled to the relevant outer side by means allowing its positioning in a triangle folding condition, in a position substantially parallel with respect to the relevant outer side.

2. Warning red triangle for signalling a stop along a road according to claim 1, **characterised in that** said inner sides are coupled to said inner sides by pins allowing its rotation in a position substantially parallel with respect to the relevant outer side.

3. Warning red triangle for signalling a stop along a road according to claim 2, **characterised in that** said inner sides rotate behind the relevant outer side .

4. Warning red triangle for signalling a stop along a road according to claim 1, **characterised in that** said inner sides are coupled to said outer sides by sliding means allowing their sliding in a position substantially parallel with respect to the relevant outer side.

5. Warning red triangle for signalling a stop along a road according to claim 4, **characterised in that** said inner sides slide behind the relevant outer side.

6. Warning red triangle for signalling a stop along a road according to one of the previous claims, **characterised in that** said support base provides two support elements, pivoted at the bottom to the triangle shaped structure, in such a way to be able to take two positions, respectively a use and a rest position, and provided at their ends with two downward foldable legs, so as to be able to take two positions, respectively a use and a rest position.

7. Warning red triangle for signalling a stop along a road according to each one of the preceding claims, substantially as illustrated and described.
